# EUROPEAN PATENT SPECIFICATION

(11) **EP 0 335 517 B1**
(45) Date of publication and mention of the grant of the patent: **08.06.1994**
(21) Application number: 89302294.7
(22) Date of filing: 08.03.1989
(51) Int. Cl.: G11B 5/596, G11B 27/30, G11B 21/08

(54) **Servo address system**
Servoadresssystem
Système de servoadresse

(30) Priority: 28.03.1988 US 173770
(43) Date of publication of application: 04.10.1989
(73) Proprietor: SEAGATE TECHNOLOGY INTERNATIONAL, Georgetown, Grand Cayman Island (KY)
(72) Inventor: Volz, LeRoy Allen, Northridge California 91326 (US); Pease, Mark Edward, Newbury Park California 91320 (US)
(74) Representative: Sturt, Clifford Mark

(56) References cited:
- EP-A- 0 243 729
- US-A- 4 682 253

## Description

This invention relates generally to servo seeking and tracking systems for use in computer disk drive units and the like.

In recent years, micro-computer equipment, such as so called personal and desk top computers, has become extremely popular for a wide variety of business and educational and other uses. Such computers commonly include a main central processor unit having one or more memory storage disks for storage of data. In many modern computers, a plurality of the storage disks, of a type sometimes referred to as "hard" disks are provided as part of a Winchester-type disk drive unit, in which the storage disks are supported in a stack on a rotary spindle within a substantially sealed disk drive housing. The disks are rotatably driven in unison by a small spindle motor within the disk drive housing, and one or more electro-magnetic heads are displaced by a head positioner assembly to traverse surfaces of the rotating disks for the purpose of reading and writing data. Such Winchester-type disk drive units are generally preferred in comparison with so called "floppy" disk drive units due to their higher memory storage capacities and faster operating speeds.

In a typical Winchester-type disk drive unit, data is recorded onto magnetisable surfaces or surface films on the memory storage disk in the form of data bits adapted to be encoded and de-coded in binary form. The data is recorded within the confines of narrow concentric tracks defined on the disk surfaces, with track densities in the range of 500 to 1,000 and more tracks per inch (19.69 to 39.37 and more tracks per mm) being relatively well known. The total memory storage capacity for any selected disk drive unit is directly proportional to the number of available data tracks. Thus, when the disk drive unit includes multiple storage disks, the total number of available data tracks and thus the total memory storage capacity is increased.

In normal operation of a Winchester-type disk drive unit, a system controller is provided for identifying the location of data which has been recorded upon the storage disks, typically through the use of directory name, file name, and/or data address information. When reading of specific data tracks is desired, the system controller signals the head positioner assembly to displace the heads to the desired position for accessing the data. Alternatively, when data recording or writing is desired, the system controller signals disk drive circuitry to command the head positioner assembly to displace the heads so as to align one head with a vacant data track. For accurate track seeking and head alignment therewith, detectable servo information is normally pre-recorded onto one or more of the memory storage disks.

In one known servo seeking and tracking system, each surface of each disk includes servo information pre-recorded within radially spaced servo segments or sectors. This type of servo system, commonly known as an "embedded" servo system, provides data which is read by the relevant head for the purpose of seeking and tracking a designated data track. During head traverses to seek a new specified data track, the head responds to embedded track address information within the servo sectors to identify a specified destination track. While such embedded servo systems have functioned generally satisfactorily, such systems inherently include track seeking or access speed limitations due primarily to the limited sample rate at which the head can read and respond to servo information within the servo sectors. This inherent access speed limitation is rendered more significant when relatively high track densities are used. Moreover, an embedded servo systems fixes the number of available data and servo sectors in a manner which is incompatible with some types of controller interfaces.

So called "dedicated" servo systems are also generally known in the art, wherein servo seeking and tracking information is pre-recorded onto one surface of a selected memory storage disk in a disk drive unit having multiple disks. The servo seeking and tracking information is detected by an associated servo head for the purpose of identifying track crossings effected by the servo head during seeking and accessing and for the purpose of displacing and aligning a respective data head with a designated data track. Such dedicated servo systems are preferred in certain multiple disk microcomputer applications since they can permit an overall increased data storage capacity. However, as with the embedded servo systems described above, track seek/access errors can arise as a result of small disk imperfections which can generate false track crossing readings. Moreover, in order to prevent head overshoot during track seeking, head deceleration at the conclusion of track seeking must normally be designed for a relatively slow, worst case condition. Such prior art systems are described in US-A-4 682 253.

There exists, therefore, a significant need for an improved servo seeking and tracking system for use in computer disk drive units, wherein the system is relatively simple and operates automatically to prevent and/or correct track seeking and head positioning errors. In accordance with one aspect of the present invention, there is provided a servo address system for a computer disk drive unit having a plurality of memory storage disks, the address system comprising a servo head in operative association with a dedicated servo surface provided on one of the storage disks, and servo data recorded in generally concentric tracks ("0" to "7") on the dedicated servo surface, the servo data being readable by the servo head and comprising a succession of synchronising bits recorded at regular intervals in each of said tracks to define there-between a plurality of bit frames; characterised in that the servo data comprises a plurality of servo bits ("A" to "D") recorded within each of the said bit frames so as to form in one of a first and a second distinct pattern on the opposite combination, each combination being interpreted as one of the two values of a single binary digit after detection and reading by the servo head a selected successive plurality of the bit frames for each of the tracks defining a unique track address, wherein each track address is represented by a unique plurality of said binary digits in binary code.

In its preferred form, as described below, the servo address system provides unique, positive address identification for each of a large plurality of the concentric tracks on the dedicated servo surface. The servo data is pre-recorded onto the dedicated servo surface for detection by the servo head during operation of the disk drive unit. The detected servo data comprises a unique data pattern for each track or group of tracks, and the servo system responds to the address information provided thereby to verify head position for the purpose of preventing seeking and tracking errors.

In the described embodiment, the dedicated servo surface comprises one side of one of a plurality of memory storage disks arranged in a computer disk drive unit for rotation as a group about a common spindle axis. A head positioner assembly carries a plurality of electro-magnetic heads in individual flux coupled association with the disk surfaces, for example with two heads being provided on opposite sides of each memory storage disk. One of the heads comprises the servo head for reading the servo data on the dedicated servo surface, whereas the remaining heads comprise data heads for reading and/or writing data relative to the associated disk surfaces. A conventional system controller operates through appropriate disk drive circuitry to command the head positioner assembly to displace all of the heads as a group with respect to the disk surfaces. The servo head attracts the servo data throughout such displacement to identify and verify the position of the servo head, thereby also identifying and verifying the position of the data heads.

The servo data conveniently includes in each of the bit frames at least one and preferably a sequence of the data bits, the bit frames being repeated in groups with each group defining a unique address corresponding with a specific track. The groups thus provide a repeating address detectable by the servo head throughout each revolution of the disk in use.

In a preferred form of the invention, the repeating groups provide unique address information corresponding with a small annular band of adjacent tracks on the servo disk, for example four adjacent tracks. The data bits within the bit frames may then represent primary digits of a binary address code unique to the small band of tracks, and these primary digits may be combined with secondary digits derived from comparing position error signals in quadrature to provide a unique binary address code for each track.

Preferably also,the synchronising bits demarcate the leading and trailing edges of each bit frame, and each bit frame is sub-divided into first and second portions having data bits recorded therein with one of two durations detectable and distinguishable by the servo head. For example, the data bits may be recorded in the first and second portions of each bit frame in combinations of relatively long and relatively short durations, which represent the digit "1" or the digit "0" in binary code. A preferred arrangement features ten successive bit frames providing an address so that a total of ten digits "1" or "0" and combinations thereof for the address code unique to the specific track.

The invention also features a memory storage disk for a computer disk drive unit, comprising a dedicated servo surface on one side of the disk, and servo data recorded on the dedicated servo surface in a plurality of concentric tracks ("0" to "7"), characterised in that the servo data defines, for each of the tracks, a track address repeated in succession throughout the track, the track address being defined by a repeating succession of a selected plurality of bit frames, each having a plurality of servo bits ("A" to "D") recorded therein in the form of a first and second distinct pattern or the opposite combination, each combination being interpreted as one of the two values of a single binary digit.

According to another aspect of the invention, there is also provided a method of tracking a plurality of data heads relative to a corresponding plurality of data surfaces on a plurality of memory storage disks arranged in a stack within a computer disk drive unit for rotation together about a common axis, the method comprising the steps of recording servo data in a plurality of generally concentric tracks ("0" to "7") on one surface of a selected one of the memory storage disks, the one surface comprising a dedicated servo surface, detecting and monitoring the servo data with a servo head to identify the track aligned therewith, and displacing the servo head into alignment with a specified track so as to displace the data heads concurrently into alignment with respective tracks on the corresponding data surfaces, characterised in that in the recording step the servo data is recorded onto the dedicated servo surface in the form of a succession of individual bit frames for each of the tracks, each of the bit frames including the servo bits in the form of a first and second distinct pattern or the opposite combination, each combination being interpreted as one of the two values of a single binary digit and a selected successive plurality of the bit frames defining an address which repeats throughout the respective track, the pattern of servo bits within the address being unique to that track.

The present invention will be described further, by way of example, with reference to the accompanying drawings, in which:-
Figure 1 is a plan view of a computer disk drive unit including a servo address system embodying the present invention;
Figure 2 is a schematic view illustrating multiple memory storage disks of the disk drive unit of Figure 1, one of the disks including a dedicated servo surface and having a servo head associated therewith;
Figure 3 is a schematic view illustrating initial magnetisation of the dedicated servo surface;
Figure 4 is an enlarged, developed diagram showing a pattern of bits recorded in a bit frame to provide address information on the dedicated servo surface;
Figure 5 is a diagram representing the detection of the bits in the bit frames as shown in Figure 4, for the purpose of identifying and verifying the rotational position of the dedicated servo surface relative to the servo head;
Figure 6 is a timing chart showing flux change signals corresponding with first portions of the bit frames on adjacent tracks of the dedicated servo surface;
Figure 7 is a timing chart similar to Figure 6, but showing flux change signals corresponding with second portions of the bit frames on adjacent tracks of the dedicated servo surface;
Figure 8 is a diagram representing position error signals derived from the position of the servo head relative to adjacent tracks on the dedicated servo surface, and the use of such position error signals in quadrature to generate binary code signals representative of servo head cross over from one track to another; and
Figure 9 is a chart illustrating the use of bit frame address information and position error signals to create unique multi-digit addresses in binary code corresponding with each track on the dedicated servo surface.

As shown in the drawings, a computer disk drive unit 10 includes a servo address system having an electro-magnetic servo head 12 (Figure 2) for detecting servo data pre-recorded onto a dedicated servo surface 14 on one side of one of a plurality of memory storage disks 16. The remaining surfaces of the storage disks 16 comprise data surfaces 18 for reading and/or writing data through the use of a corresponding plurality of electro-magnetic data heads 20. In accordance with the invention, the servo head 12 responds to the prerecorded servo data to permit verification of track position of the data heads 20, for the purpose of identifying and correcting seeking and tracking errors.

The servo address system of the present invention provides the capability for more accurate data seeking and faster data seeking times in Winchester-type disk drives used in modern personal and desk top computers. The system utilises a specific pattern of servo data bits recorded in concentric tracks on the dedicated servo surface 14 to permit the servo head 12 to identify the specific track aligned therewith. That is, the servo system utilises this identification information to verify alignment with a respective track designated by a system controller 22 (Figure 2) and to correct seeking and tracking errors, if present. With this arrangement, the disk drive unit may be designed for faster track seeking and data access times in comparison with prior art units, since the servo address system provides means for self-correcting tracking or seeking errors which might arise, for example, by slight overshoot of the servo head during a seeking operation.

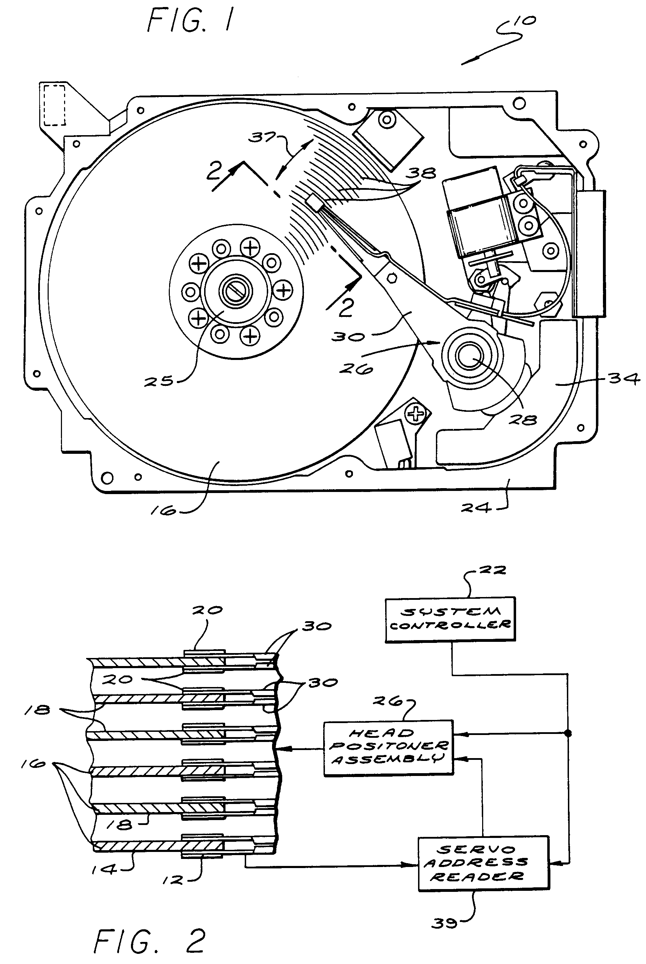

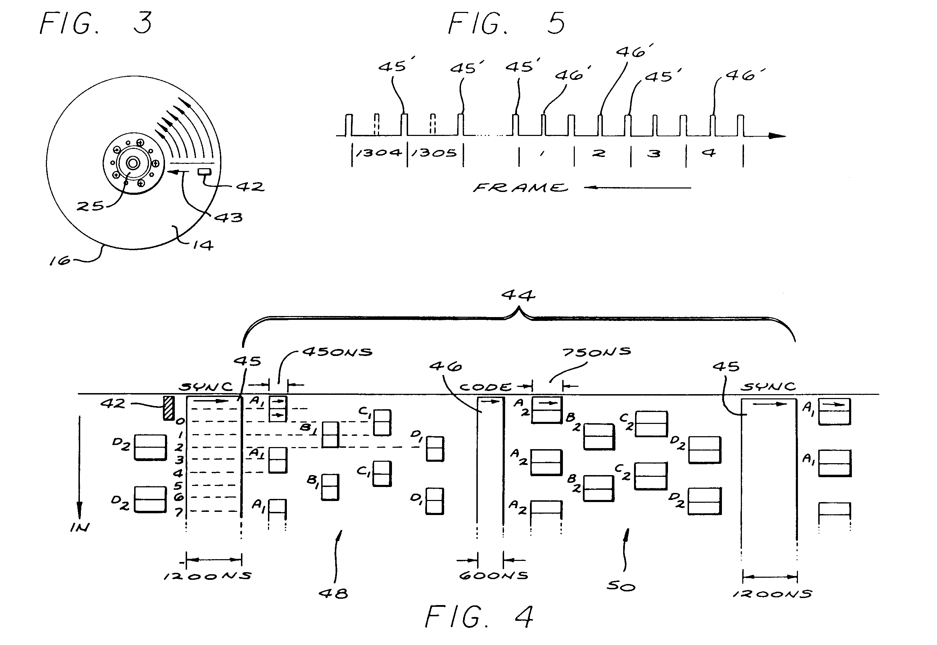

As shown generally in Figure 1, the computer disk drive unit 10 comprises a so called "hard" disk drive of the general type used in modern personal computers and the like. The disk drive unit conventionally includes a substantially sealed housing 24 defined by appropriate inter-connected housing members to enclose the various disk drive components. The sealed housing typically has generally standardised external dimensions selected to fit within an installation envelope of limited size within a cabinet (not shown) of a central processor for a computer. The disk drive housing 24 encases a vertically stacked array of memory storage disks 16 (Figures 1 and 2) mounted spaced from one another upon a spindle 25 and rotatably driven as a group by a spindle motor. The disks 16 preferably have diametric sizes of about 5.25 inches (133.35 mm) or about 3.5 inches (88.9 mm) to correspond with standard disk sizes in the computer industry. The disks 16 are mounted within vertical limits permitting the disk drive unit to fit within a space having a standardised full height dimension of about 3.25 inches (82.55 mm) or a half height dimension of about 1.625 inches (41.28 mm). Preferably, up to five storage disks 16 are incorporated into a disk drive unit of half height dimension.

The illustrative disk drive unit 10 includes a head positioner assembly 26 mounted within the sealed housing 24 at a position alongside the disk stack. The head positioner assembly 26 is movably supported by means of a bearing 28 or the like, and carries a plurality of generally parallel arms 30, each having a respective one of the electro-magnetic heads 12 or 20 at the distal end thereof. In the illustrated embodiment, the lowermost one of the arms 30 carries the servo head 12 in close proximity with the dedicated servo surface 14, shown as the under surface of the lowermost disk 16 in Figure 2. The remaining heads 20 are disposed respectively in close, flux coupled proximity with the remaining upper and lower disk surfaces for reading and writing data on these disk surfaces. A suitable positioner mechanism 34, such as a moving coil actuator, forms a portion of the head positioner assembly 26 and responds to commands from the system controller 22 (Figure 2) to displace the heads 12 and 20 as a group radially relative to the respective disk surfaces, as indicated by arrow 37 in Figure 1, in a well known manner. Such displacement of the heads functions to align a selected one of the data heads 20 with a selected one of a plurality of data tracks 38 on the associated disk surface for the purpose of reading and writing data.

In general terms, in accordance with the invention, the dedicated servo surface 14 on the lowermost disk 16 includes pre-recorded servo data arranged in a predetermined pattern of bits designed to represent a unique address for each of a large plurality of concentric servo tracks. The servo address system includes a servo address reader 39 for interpreting the bit pattern comprising the servo data in a manner permitting accurate servo head 12 seeking and tracking alignment with a specific servo track, and further permitting the servo head to seek and align with a new servo track as specified by the system controller 22. Detection of the servo data on the dedicated servo surface 14 permits the servo head 12 to identify and verify alignment with the new servo track at the conclusion of seeking, or to correct any seeking or tracking error. Significantly, this accurate and self-correcting operation of the servo head 12 permits the remaining data heads 20 to be positioned with great precision, since each one of the data heads 20 moves with the servo head 12 and thus is aligned with a corresponding track on the associated data surface 18 of the respective disk 16.

In accordance with a preferred form of the invention, the dedicated servo surface 14 of the lowermost disk 16 is prepared initially at the factory, prior to consumer purchase and use of the disk drive unit, by means of a servo track writer 42. The servo track writer 42 is conventionally supplied with an appropriate electrical current and displaced in steps radially across the disk 16 in close over-lying relation with the disk surface 14, as indicated by arrow 43.

The servo track writer 42 is thus used to apply the desired pattern of servo data onto the disk surface 14 in appropriate concentric tracks. More specifically, with reference to Figure 4, the bit pattern for the servo data is shown with respect to a single bit frame 44 and is recorded onto a total of eight adjacent tracks "0" to "7", with the numbers of these tracks increasing in a radially inward direction from the outermost track "0" on the disk. It will be understood, of course, that these illustrative tracks represent a large plurality of approximately 500 to 1,000 or more tracks per inch (19.69 to 39.37 tracks per mm) which may be formed upon the servo surface 14.

The servo track writer 42 records the servo data in the form of a repeating pattern in the bit frames 44 for each discrete servo track. Each bit frame 44 includes an array of servo bits identified generally by the reference letters "A" to "D", these data bits comprising localised flux regions of predetermined direction and time duration when the disks are rotated at a normal operating speed, typically about 3,600 revs per minute. A successive plurality of the bit frames collectively define an "address", which can be detected and recognised by the servo head 12 and the address reader 39 during normal operation of the disk drive unit, as described in more detail below. While the number of bit frames 44 per track, i.e. per turn of the disk, and the number of bit frames 44 used to define one address may vary, a preferred arrangement provides a total of ten successive bit frames 44 to define one address, which is repeated throughout the track. With bit frames having an individual time span of about 12.8 micro-seconds, approximately 1,305 bit frames can be recorded onto a single track of a servo surface 14 having a conventional disk diameter of about 3.5 inches (88.9 mm). With this arrangement, with ten bit frames per address, the address can be repeated 130 times for each track on the servo surface.

The leading and trailing edges of each bit frame 44 are characterised by synchronising bits 45 which are recorded onto the servo surface 14 at regular intervals. The synchronising bits 45 are preferably applied to the servo surface 14 by the servo track writer 42 by initially positioning the track writer 42 with its radially inner edge positioned at the track "0" and then controlling energisation of the track writer 42 in a manner so as to record initial portions of the synchronising bits 45 onto the servo surface 14. The track writer 42 is then indexed radially inwardly one half step for centering it upon the track "0" and the synchronising bit recording step is repeated. This process is repeated in one half step increments, rather than in full step increments, to permit simultaneous recording of the various servo bits "A" to "D" in the bit pattern described below. When the servo track writer 42 is ultimately indexed to the radially innermost track position on the servo disk surface, the resultant synchronising bits 45 comprise radial bands or segments in the form of stripes emanating outwardly from the centre of the disk. These bands have their leading edges, in the direction of rotation of the disk, spaced apart by a predetermined time span during steady state disk rotation, such as by a span of about 12.8 microseconds. In addition, the trailing edge of each synchronising bit 45 is positioned a predetermined time span following the associated leading edge, such as a span of about 1,200 nano-seconds.

As shown further in Figure 4, the bit frame 44 is further characterised by an intermediate code bit 46 recorded in the form of a radial band or stripe at the same time as the recording of the synchronising bits 45. This code bit 46 is positioned at a predetermined point between the associated pair of synchronising bits 45, and further has a width or time span which differs from the time span of the other servo data, for example a time span of 600 nano-seconds. The presence of this code bit 46 permits the servo head 12, during disk drive operation, to distinguish between a first portion 48 and a second portion 50 of each bit frame 44.

The code bit 46 may be omitted for some of the bit frames 44. Such omission may occur in a regular pattern for the majority of each track, and further may include a sequence of successive code bit omissions at one region of the track. This arrangement can be detected during disk drive operation by the servo head 12 to identify a precise starting point for each track revolution. By identifying such a starting point, the servo head 12 and related circuitry may then count the succession of synchronising bits 45 to identify precisely the rotational position both of the servo disk and the other disks in the stack.

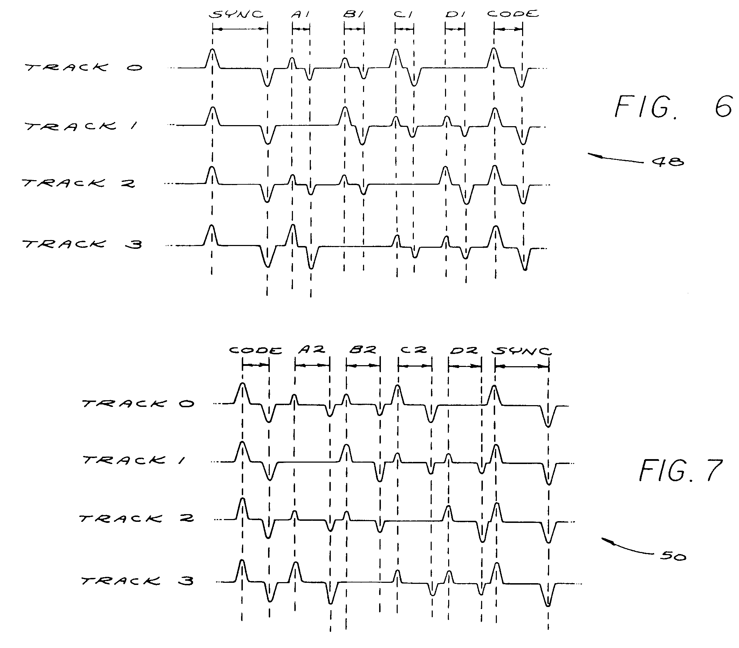

For example, as viewed generally in Figure 5, the servo head 12 can be designed to detect each synchronising bit 45 of each track, such as by peak detection of the flux change created by the leading or the trailing edge thereof to generate a train of synchronising pulses 45′. The time span between the synchronising pulses 45′ is recognisable by the servo head 12 to discriminate and count the pulses 45′ from a reference point. The occurrence of the code bits 46 is also detectable to generate an over-lying train of code bit pulses 46′. When a succession of bit frames 44 are detected with the code bits 46 omitted, such as a succession of frames identifying the end of a track revolution as represented in dotted lines in Figure 5, the following synchronising pulse 45′ associated with the first bit frame for each revolution can be identified as the reference point.

With further reference to Figure 4, the servo bits "A" to "D" are recorded within both of the first and second portions 48 and 50 of each bit frame 44 by the servo track writer 42. These servo bits, in accordance with the preferred form of the invention, are recorded in a repeating pattern within a small annular band of adjacent tracks as the track writer 42 is indexed radially inwardly in one half step increments, as previously described.

More particularly, at a predetermined time interval following the trailing edge of the synchronising bit 45, the track writer 42 records a servo bit "A1" having its radially inboard edge aligned with the track "0". This first servo bit "A1" is positioned within the first portion 48 of the bit frame 44. A similar servo bit "A2" is recorded within the second portion 50 of the bit frame 44, at a predetermined time following the trailing edge of the code bit 46. While the time span between the synchronising bit 45 or code bit 46 and the following servo bit "A" may vary, one preferred form of the invention records the servo bit "A1" at 800 nano-seconds following the synchronising bit 45, and the servo bit "A2" at 600 nano-seconds following the code bit 46. As shown in Figure 4, the time durations of the servo bits "A1" and "A2" are different, with the time duration of the servo bit "A1" being 450 nano-seconds and the time duration of the servo bit "A2" being 750 nano-seconds, for example. This combination of a short servo bit in the first portion 48 of the bit frame 44, together with a long servo bit in the second portion 50 of the bit frame 44, provides information readable by the servo head 12, as will be described below in more detail, in binary form such as the digit "0". A combination of a long servo bit in the first portion 48 and a short servo bit in the second portion 50 of the bit frame 44 may then be readable by the servo head 12 as the digit "1".

When the servo track writer 42 is indexed one half step into centered alignment on the track "0", additional servo bits are recorded in the first and second portions 48 and 50 of the bit frames 44. As shown in Figure 4, a short servo bit "C1" is recorded within the first portion 48 with its leading edge at a predetermined position relative to the synchronising bit 45, and with a short time span similar to the servo bit "A1". A long servo bit "C2" is recorded in a similar fashion within the second portion 50, wherein the servo bit "C2" has a long time span corresponding with the servo bit "A2". The track writer 42 is then indexed another one half step for alignment with the track "1", and a pair of servo bits "B1" and "B2" are recorded respectively within the first and second portions 48 and 50 of the bit frame 44. These servo bits "B1" and "B2" also have respectively short and long time durations and are located at precise positions within their respective frame portions. After another one half step indexing of the track writer 42 for alignment with the track "2", a pair of short and long bits "D1" and "D2" respectively are recorded in the frame portions 48 and 50 and at predetermined positions therein. Finally, the track writer 42 is indexed into alignment with the track "3" and the pattern of servo bits is repeated by recording additional bits "A1" and "A2" at timed positions and spans corresponding with the bits "A1" and "A2" described previously. The succession of servo bits is repeated until the last or radially innermost servo track is reached on the surface 14 of the disk 16.

Accordingly, the first portion 48 of each bit frame 44 includes a timed succession of servo bits "A1" to "D1" which over-lap the tracks "0" to "3" in varying degrees, whereas the second portion 50 of the bit frame 44 includes a similar timed succession of servo bits "A2" and "D2" over-lapping the same tracks in a similar varying manner. This general pattern of servo bits is repeated for all of the bit frames 44 throughout the full length (i.e. one turn) of each of the tracks "0" to "3" and is also repeated as the track writer 42 moves radially inwardly through successive groups of each four tracks. However, the arrangement of the short and long servo bits in the bit frames 44 for any given track will exhibit a regular pattern for the purpose of providing a distinct track address.

The above described pattern of servo bits is detectable by the servo head 12 during disk drive operation to identify the track with which the head is aligned by a specific track address. More specifically, as shown in Figures 6 and 7, the servo head 12 has the capability of detecting the various bits recorded in any specific track by peak detection of the flux changes represented by the leading and trailing edges of the bits. The magnitudes of the detected flux changes are a function of the degree to which the detected bits track beneath the servo head. Moreover, this detection of the flux changes at leading and trailing edges of the bits permits the servo head 12 to distinguish by time duration between the various types of bits, such as the synchronising bits 45, the code bits 46 and the various short and long servo bits "A" to "D".

With reference to the track "0" in Figures 6 and 7, the servo head 12 initially detects the leading and trailing edges of the synchronising bit 45. Thereafter, the head detects in sequence the leading and trailing edges of the servo bits "A1" and "B1", with the flux changes in respect of these having a magnitude of fifty percent of that of the synchronising bit 45, since these bits "A1" and "B1" are only half aligned with the servo head 12 when the head 12 is properly tracked on the track "0". The servo head 12 then detects the edges of the servo bits "C1" as a flux change of full magnitude since that bit is centered on the track "0". The head then fails to detect the servo bit "D1", which is fully out of alignment with the track "0", before detecting the leading and trailing edges of the code bit 46. The servo head 12 then detects in a similar sequence the servo bits recorded in the second portion 50 of the bit frame 44, as viewed in Figure 7. However, since the servo bits "A2" to "D2" are longer in duration, the time spans detected between the leading and trailing edges of these servo bits are different from those detected in the first portion 48 of the bit frame 44.

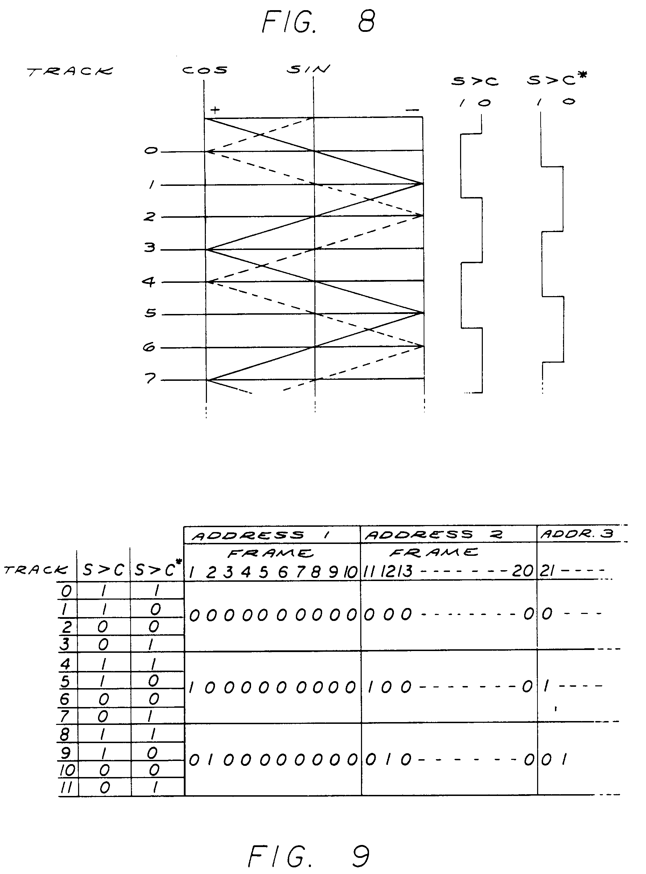

The servo head 12 functions through the address reader 39 to generate position error signals of the type known in the art for the purpose of tracking the servo head 12 with a selected servo track. More particularly, with reference to Figure 8, the position error signals are generated in quadrature through a comparison of the detected flux changes representing the leading and trailing edges of the various bits to provide a maximum position error signal when the leading and trailing edges of the bits are detected as flux changes having equal magnitude, such that the magnitude of the position error signal decreases as the head moves away from alignment with the specified track. In a quadrature servo system, this provides a pair of sine-like error signals, shown in Figure 8 as a dotted line "SIN" curve for the track "0" and the even numbered tracks and as a solid line "COS" curve for the odd numbered tracks. The address reader 39 is designed to respond to these position error signals to maintain the head on a selected track. In other words, the address data is utilised for positioning purposes relative to a designated track.

Moreover, the servo address reader 39 is able to discriminate between the time spans of the various bits detected as viewed in Figure 7. That is, the system is able to identify each synchronising bit 45, each code bit 46 and the intervening short or long servo bits. As stated previously herein, the servo address reader 39 interprets a combination of short servo bits in the first portion 48 of the bit frame 44 with long servo bits in the second portion 50 of the bit frame 44 as the digit "0" in binary code. Conversely, the reader 39 interprets the opposite combination, namely, long bits in the first portion 48 and short bits in the second portion 50 as the digit "1" in binary code. When a succession of several bit frames in each track is used to define a track address, each bit frame 44 can provide one primary digit of a multi-digit address in binary code. In this regard, it will be understood that the address digits will preferably be written in so called grey code, and the discussion herein of "binary" code, etc. is intended to encompass both binary and grey code techniques. This address information is depicted in Figure 9, which charts each track with repeating groups of ten bit frames providing repeating ten primary digit addresses for each adjacent group of four tracks on the servo surface 14. For example, for tracks "0" to "3", the repeating bit frames 44 are recorded with combinations of short and then long servo bits to provide a ten digit address represented by ten "0"'s. The next group of four tracks "4" to "7" includes sets of ten bit frames defining a different binary address code, such as by recording the first bit frame of each ten frame group to include long and then short servo bits and the remaining bit frames as before, thereby defining an address represented by a "1" followed by nine "0" 's. Similar variations may be used to provide each group of four tracks with a unique address code.

Each track within any given group of four tracks can then be distinguished by comparison of the position error signals, described above, to provide a pair of secondary digits for the unique address code. More particularly, as shown in Figure 8, and as is known in the art, the quadrature position error signals can be compared to define the transition points associated with track cross over during head displacement in track seeking, thereby permitting the servo head 12 to seek and find a designated track starting from an initial reference point, such as the track "0". However, in accordance with the invention, these position error signals are further compared to define a binary digit "1" when the "SIN" signal is greater than the "COS" signal, or a binary digit "0" when the "COS" signal is the greater. Similarly, the error signals are compared to provide a digit "1" when the "SIN" signal is greater than the inverse of the "COS" signal (referred to in Figure 8 as "C*"), or a digit "0" when the inverted "COS" signal is the greater. These additional two binary digits comprising the secondary digits for the track address are shown for tracks "0" to "11" in Figure 9 which indicates a code of "1" and "1" for the track "0", a code of "1" and "0" for the track "1", etc. As a result, a unique pair of secondary digits for the first to fourth track of each group of four tracks is provided. When the secondary digits are considered in combination with the primary digits derived from the bit frames 44, the servo head 12 and the servo address reader 39 are able to identify each discrete track on the servo surface 14 for positive track identification.

The foregoing track identification servo system advantageously permits the servo head 12 to move rapidly to a specific track as commanded by the system controller 22, and to lock onto that track, whereby accurate positioning of the remaining data heads 20 relative to the corresponding tracks on the associated disk surfaces can be achieved. When the servo head 12 arrives at the designated track, the servo head is able to identify the track by its unique address for the purpose of confirming a proper track seeking result without positioning error. If a positioning error exists, the servo head 12 is able to self-correct by virtue of the address reader 39 directing the head positioner assembly 26 to adjust the head position. The use of the first and second portions 48 and 50 for each bit frame 44 comprising a sequence of long-short or short-long bits, beneficially provides positioning information for both types of bits for off-setting or averaging any errors which might be attributable to pulse crowding.

The track address identification and verification system of the invention permits the disk drive unit to be designed for relatively faster track seeking and access times, in comparison with the prior art, since the servo head 12 and address reader 39 will self-correct any positioning errors, such as head overshooting. The positioner mechanism 34 of the positioner assembly 26 may thus be designed for initially and rapidly displacing the data heads 20 in a gross seeking step to a position approximating the position of the specified track, after which the servo head and address reader will fine tune automatically for proper track alignment.

A variety of modifications to the described servo address system will be apparent to those skilled in the art. For example, each bit frame 44, compassing a sequence of long-short or short-long bits, beneficially provides positioning information for both types of bits for off-setting or averaging any errors which might be attributable to pulse crowding. The particular electronic construction of the address reader may vary but, as described herein, may comprise conventional flux change detection components and signal generation and comparator circuity associated therewith.

## Claims

1. A servo address system for a computer disk drive unit having a plurality of memory storage disks (16), the address system comprising a servo head (12) in operative association with a dedicated servo surface (14) provided on one of the storage disks, and servo data recorded in generally concentric tracks ("0" to "7") on the dedicated servo surface, the servo data being readable by the servo head and comprising a succession of synchronising bits (45) recorded at regular intervals in each of said tracks to define therebetween a plurality of bit frames (44); characterised in that the servo data comprises a plurality of servo bits ("A" to "D") recorded within each of the said bit frames (44) so as to form a first and a second distinct pattern or the opposite combination, each combination being interpreted as one of the two values of a single binary digit after detection and reading by the servo head, a selected successive plurality of the bit frames (44) for each of the tracks defining a unique track address, wherein each track address is represented by a unique plurality of said binary digits in binary code.

2. A system according to claim 1 characterised in that the selected successive plurality of the bit frames defining the address are repeated throughout the associated track.

3. A system according to claim 1 or 2 characterised in that each of the bit frames includes a first portion (48) and a second portion (50) in succession, the servo bits recorded within each bit frame being recorded within the first and second portions in opposite ones of the first and second patterns.

4. A system according to claim 3 characterised in that the first pattern of servo bits in the first portion of a respective one of the bit frames followed by the second pattern of servo bits in the second portion of the respective one of the bit frames comprises the digit "0" in binary code, and in that the second pattern of servo bits in the first portion of the respective one of the bit frames followed by the first pattern of servo bits in the second portion of the respective one of the bit frames comprises the digit "1" in binary code.

5. A system according to claim 3 or 4 characterised in that the first pattern comprises servo bits having a relatively short duration when detected by the servo head during rotation of the storage disk providing the dedicated servo surface, and in that the second pattern comprises servo bits having a relatively long duration when detected by the servo head during rotation of the storage disk providing the dedicated servo surface.

6. A system according to any of claims 1 to 5 characterised in that a plurality of the bit frames further include code bits (46) disposed at generally intermediate positions therein.

7. A system according to claim 6 characterised in that the code bits recorded in adjacent tracks on the dedicated servo surface are positioned in generally radial alignment.

8. A system according to any of claims 1 to 7 characterised in that the synchronising bits recorded in adjacent tracks on the dedicated servo surface are positioned in generally radial alignment.

9. A system according to any of claims 1 to 8 characterised by means for identifying a reference synchronising bit for each of the tracks to demarcate a starting point for rotation of the storage disk providing the dedicated servo surface relative to the servo head.

10. A system according to any of claims 1 to 9 characterised in that the servo bits are recorded within the bit frames in a regular repeating pattern for each of a plurality of adjacent ones of the tracks to define a unique address for the adjacent tracks, and in that means are provided for generating and comparing position error signals in quadrature to obtain additional signals representable in binary to distinguish each of the adjacent tracks from one another.

11. A memory storage disk for a computer disk drive unit, comprising a dedicated servo surface (14) on one side of the disk, and servo data recorded on the dedicated servo surface in a plurality of concentric tracks ("0" to "7"), characterised in that the servo data defines, for each of the tracks, a track address repeated in succession throughout the track, the track address being defined by a repeating succession of a selected plurality of bit frames (44), each having a plurality of servo bits ("A" to "D") recorded therein in the form of a first and second distinct pattern or the opposite combination, each combination being interpreted as one of the two values of a single binary digit.

12. A disk according to claim 11 characterised in that the servo bits are recorded within the bit frames in a regular repeating pattern for each of a plurality of adjacent ones of the tracks to define a unique address for the adjacent tracks, and in that means are provided for generating and comparing position error signals in quadrature to obtain additional signals representable in binary to distinguish each of the adjacent tracks from one another.

13. A disk according to claim 11 or 12 characterised in that each of the bit frames includes a first portion (48) and a second portion (50) in succession, at least one servo bit recorded within each bit frame comprising a plurality of the servo bits recorded within the first and second portions in opposite ones of a first and second pattern.

14. A disk according to any of claims 11 to 13, characterised in that a plurality of the bit frames further include code bits (46) disposed at generally intermediate positions therein.

15. A method of tracking a plurality of data heads relative to a corresponding plurality of data surfaces on a plurality of memory storage disks arranged in a stack within a computer disk drive unit for rotation together about a common axis, the method comprising the steps of recording servo data in a plurality of generally concentric tracks ("0" to "7") on one surface (14) of a selected one of the memory storage disks (16), the one surface comprising a dedicated servo surface, detecting and monitoring the servo data with a servo head (12) to identify the track aligned therewith, and displacing the servo head into alignment with a specified track so as to displace the data heads (20) concurrently into alignment with respective tracks on the corresponding data surfaces, characterised in that in the recording step the servo data is recorded onto the dedicated servo surface in the form of a succession of individual bit frames (44) for each of the tracks, each of the bit frames including the servo bits in the form of a first and second distinct pattern or the opposite combination, each combination being interpreted as one of the two values of a single binary digit and a selected successive plurality of the bit frames defining an address which repeats throughout the respective track, the pattern of servo bits within the address being unique to that track.

## Patentansprüche

1. Servoadressensystem für eine Computer-Plattenlaufwerk-Einheit mit einer Vielzahl von Speicherplatten (16), wobei das Adressensystem einen Servokopf (12), der betriebsmäßig einer dedizierten Servooberfläche (14) zugeordnet ist, die auf einer der Speicherplatten vorgesehen ist und Servodaten umfaßt, die in allgemein konzentrischen Spuren ('0' bis '7') auf der dedizierten Servooberfläche aufgezeichnet sind, wobei die Servodaten durch den Servokopf lesbar sind und eine Folge von Synchronisationsbits (45) umfassen, die unter regelmäßigen Intervallen in jeder der Spuren aufgezeichnet sind, um zwischen sich eine Vielzahl von Bitrahmen (44) zu definieren, dadurch gekennzeichnet, daß die Servodaten eine Vielzahl von Servobits ('A' bis 'D') umfassen, die in jedem der Bitrahmen (44) derart aufgezeichnet sind, daß sie ein erstes und ein zweites unterschiedliches Muster oder die entgegengesetzte Kombination bilden, wobei jede Kombination als einer von zwei Werten einer einzigen binären Ziffer nach der Detektion und dem Lesen durch den Servokopf interpretiert wird, wobei eine ausgewählte aufeinanderfolgende Vielzahl von Bitrahmen (44) für jede der Spuren eine eindeutige Spuradresse definiert und jede Spuradresse durch eine eindeutige Vielzahl der binären Ziffern im Binärcode dargestellt ist.

2. System nach Anspruch 1,
dadurch gekennzeichnet, daß die ausgewählte aufeinanderfolgende Vielzahl von Bitrahmen, die die Adresse definieren, über die gesamte zugehörige Spur wiederholt ist.

3. System nach Anspruch 1 oder 2,
dadurch gekennzeichnet, daß jeder der Bitrahmen einen ersten Abschnitt (48) und einen aufeinanderfolgenden zweiten Abschnitt (50) einschließt, und daß die in jedem Bitrahmen aufgezeichneten Servobits in den ersten und zweiten Abschnitten in entgegengesetzten der ersten und zweiten Muster aufgezeichnet sind.

4. System nach Anspruch 3,
dadurch gekennzeichnet, daß das erste Muster der Servobits in dem ersten Abschnitt eines jeweiligen Bitrahmens gefolgt von dem zweiten Muster der Servobits in dem zweiten Abschnitt des jeweiligen Bitrahmens die Ziffer '0' im Binärcode bildet, und daß das zweite Muster der Servobits in dem ersten Abschnitt eines jeweiligen Bitrahmens, gefolgt von dem ersten Muster von Servobits in dem zweiten Abschnitt des jeweiligen Bitrahmens die Ziffer '1' im Binärcode bildet.

5. System nach Anspruch 3 oder 4,
dadurch gekennzeichnet, daß das erste Muster Servobits umfaßt, die eine relativ kurze Dauer bei ihrer Detektion durch den Servokopf während der Drehung der die dedizierte Servooberfläche bildenden Speicherplatte aufweisen, und daß das zweite Muster Servobits umfaßt, die eine relativ lange Dauer bei ihrer Detektion durch den Servokopf während der Drehung der die dedizierte Servooberfläche bildenden Speicherplatte aufweisen.

6. System nach einem der Ansprüche 1 - 5,
dadurch gekennzeichnet, daß eine Vielzahl der Bitrahmen weiterhin Codebits (46) einschließt, die allgemein an in der Mitte liegenden Positionen in diesen angeordnet sind.

7. System nach Anspruch 6,
dadurch gekennzeichnet, daß die in benachbarten Spuren auf der dedizierten Servooberfläche aufgezeichneten Codebits in allgemein radialer Ausrichtung positioniert sind.

8. System nach einem der Ansprüche 1 - 7,
dadurch gekennzeichnet, daß die in benachbarten Spuren auf der dedizierten Servooberfläche aufgezeichneten Synchronisationsbits in einer allgemein radialen Ausrichtung positioniert sind.

9. System nach einem der Ansprüche 1 - 8,
gekennzeichnet durch Einrichtungen zur Identifikation eines Bezugs-Synchronisationsbits für jede der Spuren zur Markierung eines Anfangspunktes für die Drehung der Speicherplatte.

10. System nach einem der Ansprüche 1 - 9,
dadurch gekennzeichnet, daß die Servobits in den Bitrahmen in einem sich regelmäßigen wiederholenden Muster für jede einer Vielzahl von benachbarten Spuren aufgezeichnet sind, um eine eindeutige Adresse für die benachbarten Spuren zu definieren, und daß Einrichtungen zur Erzeugung und zum Vergleich von Positionsfehlersignalen in Quadratur vorgesehen sind, um zusätzliche Signale zu gewinnen, die in Binärformat darstellbar sind, um jede der benachbarten Spuren von einer anderen zu unterscheiden.

11. Speicherplatte für eine Computer-Plattenlaufwerk-Einheit mit einer dedizierten Servooberfläche (14) auf einer Seite der Platte und mit auf der dedizierten Servooberfläche in einer Vielzahl von konzentrischen Spuren ('0' bis '7') aufgezeichneten Servodaten,
dadurch gekennzeichnet, daß die Servodaten für jede der Spuren eine Spuradresse definieren, die aufeinanderfolgend über die gesamte Spur wiederholt wird, daß die Spuradresse durch eine sich wiederholende Folge einer ausgewählten Vielzahl von Bitrahmen (44) definiert ist, in denen jeweils eine Vielzahl von Servobits ('A' bis 'D') in Form eines ersten und eines zweiten unterschiedlichen Musters oder der entgegengesetzten Kombination aufgezeichnet ist, wobei jede Kombination als einer von zwei Werten einer einzigen binären Ziffer interpretiert wird.

12. Platte nach Anspruch 11,
dadurch gekennzeichnet, daß die Servobits in den Bitrahmen in einem regelmäßigen sich wiederholenden Muster für jede einer Vielzahl von benachbarten der Spuren aufgezeichnet sind, um eine eindeutige Adresse für die benachbarten Spuren zu definieren, und daß Einrichtungen vorgesehen sind, um Positionsfehlersignale in Quadratur zu erzeugen und zu vergleichen, um zusätzliche Signale zu gewinnen, die in Binärformat darstellbar sind, um jede der benachbarten Spuren von einer anderen zu unterscheiden.

13. Platte nach Anspruch 11 oder 12,
dadurch gekennzeichnet, daß jeder der Bitrahmen aufeinanderfolgend einen ersten Abschnitt (48) und einen zweiten Abschnitt (50) einschließt, und daß zumindestens ein Servobit, das in jedem Bitrahmen aufgezeichnet ist, eine Vielzahl von Servobits bildet, die in den ersten und zweiten Abschnitten in entgegengesetzten Mustern von einem ersten und einem zweiten Muster aufgezeichnet sind.

14. Platte nach einem der Ansprüche 11 - 13,
dadurch gekennzeichnet, daß eine Vielzahl der Bitrahmen weiterhin Codebits (46) einschließt, die an allgemein in der Mitte liegenden Positionen in diesem Rahmen angeordnet sind.

15. Verfahren zum Nachführen einer Vielzahl von Datenköpfen bezüglich einer entsprechenden Vielzahl von Datenoberflächen auf einer Vielzahl von Speicherplatten, die in einem Stapel in einer Computer-Plattenlaufwerk-Einheit zur gemeinsamen Drehung um eine gemeinsame Achse angeordnet sind, wobei das Verfahren die Schritte der Aufzeichnung von Servodaten in einer Vielzahl von allgemein konzentrischen Spuren ('0' bis '7') auf einer Oberfläche (14) einer ausgewählten der Speicherplatten (16), wobei diese eine Oberfläche eine dedizierte Servooberfläche bildet, der Detektion und der Überwachung der Servodaten mit einem Servokopf (12) zur Identifikation der hiermit ausgerichteten Spur und der Bewegung des Servokopfes in Ausrichtung mit einer bestimmten Spur umfaßt, um auf diese Weise gleichzeitig die Datenköpfe (20) in Ausrichtung mit jeweiligen Spuren auf den entsprechenden Datenoberflächen zu bewegen, dadurch gekennzeichnet, daß in dem Aufzeichnungsschritt die Servodaten auf der dedizierten Servooberfläche in Form einer Folge von einzelnen Bitrahmen (44) für jede der Spuren aufgezeichnet werden, wobei jeder der Bitrahmen die Servobits in Form eines ersten und eines zweiten unterschiedlichen Musters oder der entgegengesetzten Kombination einschließt, wobei jede Kombination als einer von zwei Werten einer einzigen binären Ziffer interpretiert wird und eine ausgewählte aufeinanderfolgende Vielzahl der Bitrahmen eine Adresse definiert, die sich über die gesamte jeweilige Spur wiederholt, wobei das Muster von Servobits in der Adresse für diese Spur eindeutig ist.

## Revendications

1. Système d'asservissement d'adresses pour une unité de disque d'ordinateur comprenant une pluralité de disques (16) de mémoire, le système d'adressage comprenant une tête d'asservissement (12) fonctionnellement associée à une surface (14) d'asservissement affectée prévue sur l'un des disques de mémoire, et des données d'asservissement enregistrées sur des pistes généralement concentriques ("0" à "7") sur la surface d'asservissement affectée, les données d'asservissement étant lisibles par la tête d'asservissement et comprenant une succession de bits (45) de synchronisation enregistrés à intervalles réguliers sur chacune des desdites pistes pour définir entre eux une pluralité de séquences (44) de bits ; caractérisé en ce que les données d'asservissement comportent une pluralité de bits d'asservissement ("A" à "D") enregistrés dans chacune desdites séquences (44) de bits de manière à constituer une première et une seconde configurations distinctes ou une combinaison opposée, chaque combinaison étant interprétée comme l'une des deux valeurs d'un chiffre binaire unique après détection et lecture par la tête d'asservissement, une pluralité successive choisie de séquences (44) de bits pour chacune des pistes définissant une adresse unique de pistes, dans lequel chaque adresse de pistes est représentée par une pluralité unique desdits chiffres binaires en code binaire.

2. Système selon la revendication 1, caractérisé en ce que la pluralité successive sélectionnée de séquences de bits définissant l'adresse est répétée pour toute la piste associée.

3. Système selon la revendication 1 ou 2, caractérisé en ce que chacune des séquences de bits comprend une première partie (48) et une seconde partie (50) successivement, les bits d'asservissement enregistrés dans chaque séquence de bits étant enregistrés dans la première et la seconde parties en opposition pour la première et la seconde configurations.

4. Système selon la revendication 3, caractérisé en ce que la première configuration de bits d'asservissement dans la première partie d'une donnée des séquences de bits suivie de la seconde configuration de bits d'asservissement dans la seconde partie de cette séquence de bits donnée comprend le chiffre "0" en code binaire, et en ce que la seconde configuration de bits d'asservissement dans la première partie de l'une donnée des séquences de bits suivie par la première configuration des bits d'asservissement dans la seconde partie de cette séquence correspondante des séquences de bits comprend le chiffre "1" en code binaire.

5. Système selon la revendication 3 ou 4, caractérisé en ce que la première configuration comprend des bits d'asservissement ayant une donnée relativement courte lorsqu' ils sont détectés par la tête d'asservissement pendant la rotation du disque de stockage portant la surface affectée à l'asservissement et en ce que la seconde configuration comprend des bits d'asservissement ayant une durée relativement longue lorsqu'ils sont détectés par la tête d'asservissement pendant la rotation du disque de stockage portant la surface affectée à l'asservissement.

6. Système selon l'une quelconque des revendications 1 à 5, caractérisé en ce qu'une pluralité des séquences de bits comprend en outre des bits de code (46) placés dans cette séquence généralement en des positions intermédiaires.

7. Système selon la revendication 6, caractérisé en ce que les bits de code enregistrés sur des pistes adjacentes de la surface affectée à l'asservissement sont positionnés d'une façon générale en étant alignés radialement.

8. Système selon l'une quelconque des revendications 1 à 7, caractérisé en ce que les bits de synchronisation enregistrés sur des pistes adjacentes de la surface affectée à l'asservissement sont positionnés d'une façon générale en étant alignés radialement.

9. Système selon la revendication 1 à 8, caractérisé par des moyens d'identification d'un bit de synchronisation de référence pour chacune des pistes afin de repérer un point de départ de la rotation du disque de stockage portant la surface affectée à l'asservissement par rapport à la tête d'asservissement.

10. Système selon l'une quelconque des revendications 1 à 9, caractérisé en ce que les bits d'asservissement sont enregistrés dans les séquences de bits suivant une configuration régulière qui se répète pour chacune des pistes adjacentes de la pluralité de pistes pour définir une adresse unique des pistes adjacentes, et en ce que des moyens sont prévus pour former et comparer des signaux d'erreurs de position en quadrature afin d'obtenir des signaux supplémentaires représentatifs en binaire afin de distinguer chacune des pistes adjacentes l'une par rapport à l'autre.

11. Disque de mémoire pour une unité de disque d'ordinateur, comprenant une surface (14) affectée à l'asservissement sur une face du disque, et des données d'asservissement enregistrées sur la surface affectée à l'asservissement dans une pluralité de pistes concentriques ("0" à "7"), caractérisé en ce que les données d'asservissement définissent, pour chacune des pistes, une adresse de piste répétée successivement sur toute la piste, l'adresse de piste étant définie par une succession répétée d'une pluralité choisie de séquences (44) de bits, comprenant chacune une pluralité de bits d'asservissement ("A" à "D") enregistrés sur la piste sous forme d'une première et d'une seconde configurations distinctes ou suivant la combinaison opposée, chaque combinaison étant interprétée comme l'une des deux valeurs d'un unique chiffre binaire.

12. Disque selon la revendication 11, caractérisé en ce que les bits d'asservissement sont enregistrés dans les séquences de bits, suivant une configuration répétitive régulière pour chacune de la pluralité des pistes adjacentes, afin de définir une adresse unique des pistes adjacentes, et en ce que des moyens sont prévus pour former et comparer des signaux d'erreurs de position en quadrature pour obtenir des signaux supplémentaires représentatifs en binaire afin de distinguer chacune des pistes adjacentes des autres.

13. Disque selon la revendication 11 ou 12, caractérisé en ce que chacune des séquences de bits comprend une première partie (48) et une seconde partie (50) successivement, un bit d'asservissement au moins enregistré dans chaque séquence de bits comprenant une pluralité de bits d'asservissement enregistrés dans la première et la seconde parties opposées pour la première et la seconde configurations.

14. Disque selon l'une des revendications 11 à 13, caractérisé en ce qu'une pluralité de séquences de bits comprend en outre des bits de code (46) placés en général en des positions intermédiaires.

15. Procédé d'asservissement en position d'une pluralité de têtes de données par rapport à une pluralité correspondante de surfaces de données sur une pluralité de disques de mémoire disposés en une pile dans une unité de disque d'ordinateur pour être entraînée en rotation ensemble autour d'un axe commun, le procédé comprenant les opérations d'enregistrement de données d'asservissement sur une pluralité de pistes généralement concentriques ("0" à "7") sur une surface (14) de l'un sélectionné parmi les disques (16) de mémoire, la surface considérée comprenant une surface affectée à l'asservissement de détection et de surveillance des données asservies au moyen d'une tête d'asservissement (12) pour identifier la piste alignée avec elle, et le déplacement de la tête d'asservissement pour l'amener en alignement avec une piste donnée afin de déplacer les têtes de données (20) pour les amener simultanément en alignement avec les pistes respectives sur les surfaces de données correspondantes, caractérisé en ce que, au cours de l'opération d'enregistrement, les données d'enregistrement sont enregistrées sur la surface affectée à l'asservissement sous la forme d'une succession de séquences (44) individuelles de bits pour chacune des pistes, chacune des séquences de bits comprenant les bits d'asservissement sous la forme d'une première et d'une seconde configurations distinctes ou de la combinaison opposée, chaque combinaison étant interprétée comme l'une des deux valeurs d'un unique chiffre binaire et une pluralité successive sélectionnée de séquences de bits définissant une adresse qui est répétée pour toute la piste correspondante, la configuration des bits d'asservissement à l'intérieur de l'adresse étant particulière à cette piste.
